# EUROPEAN PATENT SPECIFICATION

(11) **EP 1 741 496 B1**
(45) Date of publication and mention of the grant of the patent: **04.02.2009**
(21) Application number: 06013921.9
(22) Date of filing: 05.07.2006
(51) Int. Cl.: B07C 1/00, G01N 23/06

(54) **Method and system for identifying mail pieces containing a threatening material using transmission**
Verfahren und Vorrichtung zum Erkennen von eine gefährliche Substanz enthaltendem Postgut mittels Transmission
Procédé et système pour identifier des pièces de courrier contenant un matériau dangereux par transmission

(30) Priority: 07.07.2005 US 176706
(43) Date of publication of application: 10.01.2007
(73) Proprietor: PITNEY BOWES INC., Stamford, CT 06926-0700 (US)
(72) Inventor: Quine, Douglas B., Bethel, CT 06801 (US); Euchner, James A., Waccabuc, NY 10597 (US); Massucci, John E., Eastchester, NY 10709 (US)
(74) Representative: HOFFMANN EITLE

(56) References cited:
- WO-A-03/089156
- US-A1- 2004 076 544

## Description

The present invention relates generally to detecting potentially threatening mail, more particularly, to a method and system for examining mail pieces to determine the presence of suspicious powders or threatening letters thereby preventing hoaxes or hazards from being perpetrated through the mail distribution system.

In late 2001, several United States postal offices and other buildings were contaminated with *Bacillus anthracis* spores (anthrax) along the eastern United States, resulting in as many as twenty-two cases of anthrax infection. This incident was quite costly, not only in terms of the health-related impact, but also in the required decontamination efforts. Clean-up following the anthrax contamination proved to be difficult, labor intensive, and expensive. As this threat still exists, there is a need to detect biological contaminants within the postal packages or other containers. Similar attacks through the mail system are possible with other hazardous substances such as nerve or blistering agents, or any other substance harmful to those coming in contact with the contaminated mail piece.

In addition to actual or real acts of terror, there are, unfortunately, acts which only serve to provoke fear, i.e., hoaxes. Since the time of the original attacks of contamination in 2001, there have been reportedly over twenty-thousand (20,000) incidents or occurrences of hoaxes perpetrated through or using the mail distribution system. Over time the number of daily hoaxes has diminished, yet, the number still exceeds one incident daily.

While a sigh of relief is a natural human reaction/response to a determination that the event was a hoax, i.e., not life-threatening, the misdirection of resources and loss in productivity cannot be understated. Billions of dollars annually are lost as a result of office buildings being evacuated, employees being quarantined, examined and tested, and hospitals treating patients, i.e., with antibiotics, as a precautionary measure. Even harmless events result in building evacuations, business disruption, and mental anxiety/anguish.

A technique for automatically screening parcels is described in WO 03/089156. Each parcel is opened and compressed to cause an air flow which is analyzed by a particle sampler. The need to open the parcel is far from ideal.

US 2004/0076544 A1 describes a drop box for mail having built-in screening mechanisms of various types. Such a system is impractical and very expensive to implement.

Today, there are no satisfactory, i.e., pragmatic or economically viable, methods for detecting biohazardous/chemical threats and powder mail hoaxes perpetrated through the mail distribution system. This is, in great part, due to the daunting number of mail pieces delivered on a daily basis, (i.e., approximately 500 million daily), the complex nature of biohazardous/chemical materials, the number of similar microorganisms (i.e., those which in the same genetic family but are non-hazardous to humans), the minute quantities of the agent/material which are dangerous/hazardous, and the virtually limitless range of hoax materials which are, by definition, not intrinsically harmful. Due to the high cost of implementation, only a handful of mail recipients, e.g., members of Congress, Pentagon employees, and the President, have mail screened for the presence of hazardous agents/materials. As a general practice, each piece of mail is individually sampled (a composite sample is sent out for laboratory testing) and opened to examine its contents. All other mail recipients must be sensitive to, and on guard for, the presence of any unusual substance, especially for substances having the consistency of a powder. Furthermore, the difficulty of tracing anonymous threat mail back to the sender increases the number of hoaxes perpetrated through the mail, especially when a perpetrator may have the satisfaction of observing the disruption caused by the hoax. Moreover, a perpetrator may also remain confident that he/she is unlikely to be identified or suffer the repercussions or consequences for such activities.

A need, therefore, exists for an economically viable method for efficiently identifying mail pieces which may be unsafe for delivery, thereby mitigating biohazardous/chemical threats and/or hoaxes perpetrated through the mail delivery system.

According to a first aspect of the invention, there is provided a method for identifying mail pieces containing a threatening agent/material comprising the steps of: causing a particulate material to collect in a first region of a mail piece; producing a first content profile indicative of the internal contents of the mail piece; analyzing the first content profile to determine if the first content profile indicates the presence of the particulate material in the first region of the mail piece; out-sorting the mail piece if the first content profile is indicative of the presence of particulate material in the mail piece; causing the particulate material contained in the out-sorted mail piece to collect in a second region of the out sorted mail piece; producing a second content profile indicative of the internal contents of the mail piece; and comparing the first and second content profiles for determining whether the comparison indicates that particulate material has moved from the first region to the second region.

According to a second aspect of the invention, there is provided a system for identifying mail pieces containing a threatening agent/material comprising: first means for causing a particulate material to collect in a first predefined region of a mail piece; means for accepting the mail piece from the first means and operative to produce a first content profile indicative of the internal contents of the mail piece; a processor to determine if the first content profile indicates the presence of the particulate material in the predefined region of the mail piece; an out-sorting mechanism for out-sorting the mail piece when the processor determines that the first content profile indicates the presence of the particulate material in the first predefined region of the mail piece; means for causing particulate material to collect in a second predefined region of the outsorted mailpiece and to produce a second content profile indicative of the internal contents of the mail piece; and means for comparing the first and second content profiles for determining whether the comparison indicates that particulate material has moved from the first region to the second region.

Reference is now made to the various figures wherein like reference numerals designate similar items in the various figures and in which:
Figure 1 is a flow diagram of the method steps for examining a mail piece to determine whether the contents thereof are characteristic of a biohazardous/chemical threat or hoax;
Figure 2a is a schematic block diagram of a jogger device for preparing a mail piece for analysis by an imaging device and computer processor;
Figure 2b is a schematic block diagram of the imaging device and processor for producing and analyzing a content profile;
Figure 3a is a mail piece disposed in a first orientation for causing particulate material to accumulate in a first region of the envelope;
Figure 3b is an exemplary content profile produced by the imaging device and processor in connection with the mail piece illustrated in Figure 3a;
Figure 4a is the mail piece of Fig. 3a disposed in a second orientation for causing the particulate material to accumulate in a second region of the envelope;
Figure 4b is an exemplary content profile produced by the imaging device and processor in connection with the mail piece illustrated in Figure 4a;
Figures 5a - 5d depict a mail piece having printed matter in a corner region thereof and the corresponding content profiles when the mail piece is examined in each of two spatial orientations;
Figure 6 is a schematic block diagram of an alternate embodiment of the system having two or more non-specific biohazard threat detectors including an imaging device, an aerosol particulate counter, laser induced breakdown spectrometer and/or Optical Character Recognition (OCR) device; and
Figure 7 is a Venn diagram depicting the combined use of, and benefits derived from, multiple non-specific triggering devices as a tool for hoax detection.

A method is provided for identifying mail pieces which may contain a hazardous agent/material and/or a benign powder. The method includes the steps of (i) causing particulate material to collect in a particular region of the mail piece; (ii) producing a first content profile indicative of the internal contents of the mail piece; (iii) comparing the first content profile to a predefined baseline profile for determining whether the first content profile indicates the presence of a particulate material in the first region of the mail piece; and (iv) out-sorting a mail piece in response to the indicator. To ensure that other mail piece prints, or physical characteristics, are not mistakenly identified as particulate material, steps (i) - (iii) may be repeated with certain modifications. These changes are directed to causing particulate material to collect in a second region of the mail piece envelope and comparing a newly-developed second content profile with the first content profile to ascertain whether the particulate material shifts location, i.e., from the first to the second regions. Additionally, other non-specific threat detection apparatus may be used in combination to enhance the accuracy of the system by mitigating "false positive" results. For example, aerosol particulate counters could be used in combination with a mail piece transillumination system. Augmenting either or both of these detection/trigger devices may be the use of laser discriminators or text imaging and recognition, i.e., Optical Character Recognition (OCR) systems. The combination of these apparatus provides additional information about the identity of the observed particulate material and/or nature of the threat.

The following describes a method and system for efficiently removing or out-sorting mail pieces which may be unsafe for delivery from a mail distribution system. The method and system may be useful for determining the presence of a biohazardous/chemical threat, i.e., for yielding a positive or affirmative indication thereof, as well as for the detection of benign or hoax materials or threatening letters. It is desirable that all of these mail pieces be intercepted to enable forensic analysis and prosecution and to protect the intended recipients from the potential hazards or business disruption associated with the delivery of such mail pieces. As such, the forensic analysis may be commenced in a timely manner and the flow of contaminated mail may be detected and stopped - helping to protect public health. Furthermore, in the event of a hoax, the flow of uncontaminated mail may continue unabated and instances of disruption caused by hoaxes may be significantly reduced.

The method employs a simple, low cost examination technique, or combination of at least two complimentary examination methods, which can rapidly determine whether a mail piece is "suspect" and, therefore, requires further investigation/study. Those which are deemed suspect are out-sorted in real time for further analysis while the steady processing flow of mail continues. Timely follow-up analysis of suspect mail pieces expedites identification and stops the flow/delivery of potentially cross-contaminated mail to intended mail recipients. One embodiment of the method is identified for use on letter mail pieces fabricated from or using conventional paper envelopes of standard thickness and content while another embodiment may be used in the context of flats or parcels. The method is directed to examining loose material content, such as powdered or particulate material in such mail pieces, in addition to threatening messages on the outside of mail pieces or within envelopes which can be transilluminated with light.

Several embodiments are disclosed including the use of an energy source to generate a viewable profile of the mail piece contents, i.e., transillumination of the mail piece. Additionally, other detection schemes are employed which combine at least two non-specific triggering mechanisms to mitigate the instances of "false positive" indications. That is, by combining at least two such detection schemes, the probability of an accurate or valid assessment is dramatically increased. This embodiment is discussed hereinafter in the context of a Venn diagram.

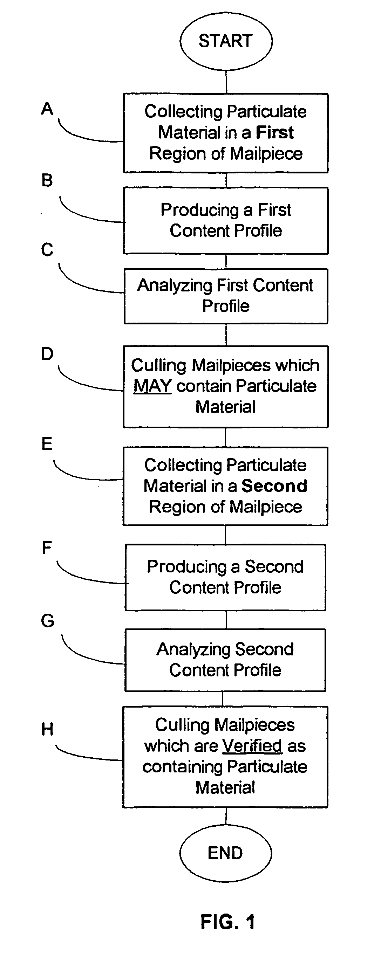

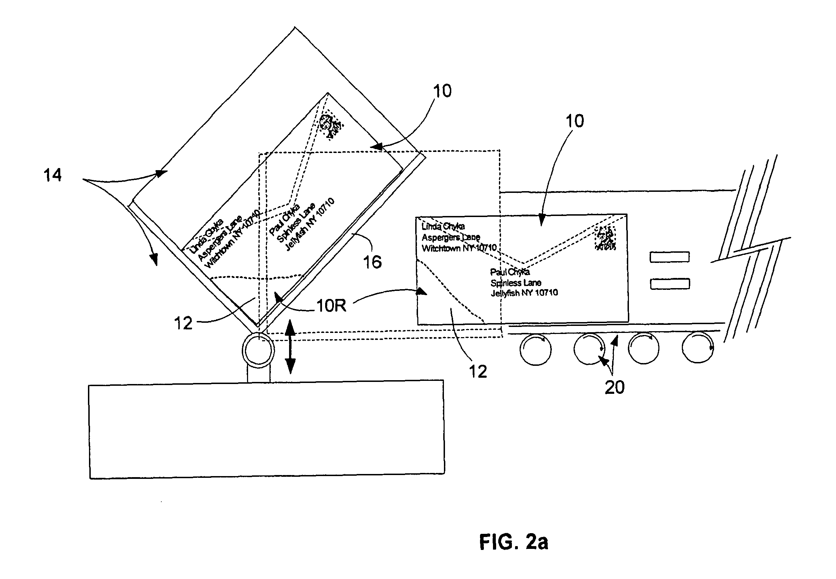

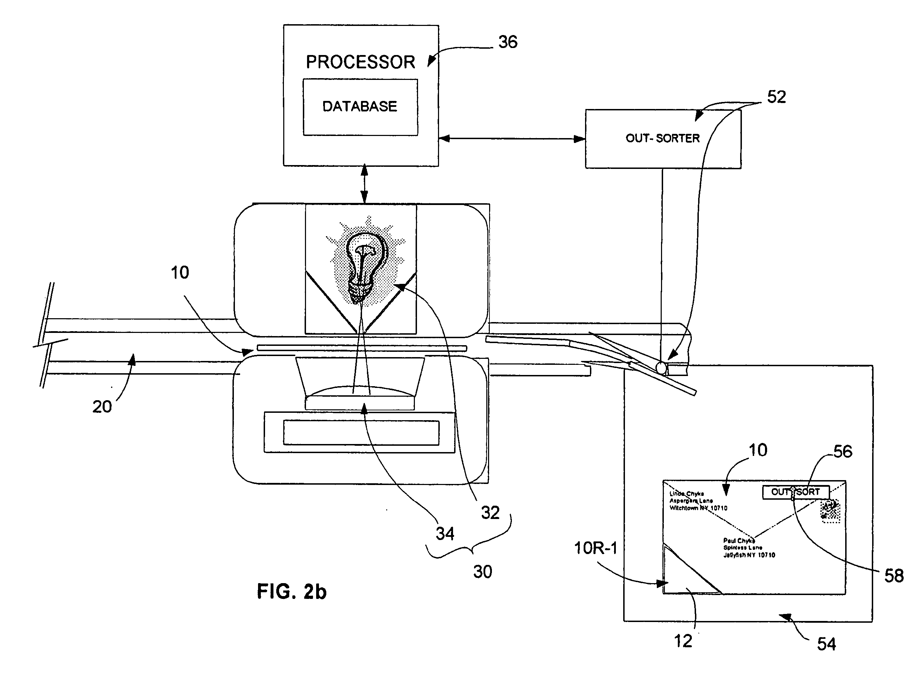

In a first embodiment of the invention shown in Figs. 1, 2a and 2b, a mail piece 10 is conveyed to several stations of a system for examining its contents. In a first step A of the method, loose particulate material 12 (if any should be present) is collected in a predefined region 10R or area of the mail piece 10, i.e., the mail piece envelope. In the preferred embodiment, the mail piece 10 is placed in a field which induces movement of loose particulate material 12 relative to the mail piece envelope. The motion inducing field may include a gravitational, inertial, centrifugal, electro-magnetic, ultrasonic field, etc., or a combination thereof, to cause internal movement/collection of the particulate material 12.

In the described embodiment, a "jogger" 14 (see Fig. 2A) is employed to cause collection of particulate material 12 into a corner 10R of the mail piece 10. Conventionally, a jogger 14 is a mechanism used in high volume mail piece inserters/sorters for aligning the corners of multiple mail pieces 10 in a tray 16 which is tilted at an angle relative to the horizontal e.g., a forty-five (45) degree angle. Further, the jogger 14 agitates the tray 16, thereby placing the mail pieces 10 in a gravitational and an inertial (vibratory) field. While such jogger mechanism 14 is typically used to align the edges of mail pieces 10 to facilitate mail processing, i.e., so that the mail pieces may be reliably fed through mail sortation equipment, the jogger 14 additionally collects or concentrates loose particulate material 12 should such material be present. For the purposes of material collection, the jogger 14 may agitate a tray 16 of about 500 (number) mail pieces 10 at 30 Hz for a period of about 30 seconds. Of course, the amount of time in the jogger 14 will depend upon the degree of settling or collection deemed sufficient for subsequent examination. A jogger of the type described is available from Opex Omation located in the state of New Jersey, USA, under the tradename "QuietJogger".

The mail pieces 10 are then removed from the jogger 14 and separated or singulated (i.e., removed one-by-one) into a mail processing or sortation system. In step B, the mail is examined to produce a content profile (discussed in greater detail hereinafter). More specifically, for processing multiple mail pieces 10, each may be placed in rapid succession on a conveyor 20 for transport to an imaging device 30 (shown in Fig. 2b as a line scan camera 34). Each mail piece 10, therefore, is in motion during examination.

Furthermore, the mail pieces 10 are arranged and positioned on the conveyor 20 in a predetermined spatial orientation so as to minimally disturb the contents of the mail piece 10. That is, the mail pieces 10 are positioned such that loose particulate material 12 induced into the corner 10R of the mail piece 10 (should any be present) remains substantially undisturbed as a result of separation and placement onto the conveyor 20. In the described embodiment, the mail piece 10 is preferably arranged in a vertically upright position, e.g., top side facing up, with the corner 10R on the left-hand side facing down. Generally, the corner 10R of interest should be positioned to retain any loose particulate material 12 while being exposed to various external forces acting on the envelope. That is, the forces of gravity and acceleration due to, or induced by, the conveyor 20 should be taken into consideration when positioning the mail piece 10.

In the illustrated embodiment, the content profile may be produced by the imaging device 30 operative to illuminate, irradiate or excite the internal contents of the mail piece 10. The imaging device 30 includes a source of light energy 32 on one side of the mail piece, a reader/receiver 34 disposed on the other, and a computer processor 36 for processing the image data. More specifically, the light source 32 may include a conventional incandescent light bulb (i.e., in the visible light spectrum) for illuminating the mail piece 10 from behind, while the receiver/detector 34 may comprise a standard digital line scan charge coupled device (CCD) camera for receiving/recording the light energy transmitted through the mail piece 10. The light 32 may be positioned off the camera axis, i.e., off-axis, to avoid shining light directly into the camera when no envelope is present. Alternatively, if an array of light emitting diodes (not shown) is used, the light emitting diodes may be activated only when the envelope is present as determined by photocells monitoring the mail path.

As the light energy passes through the mail piece 10, it may be partially, absorbed, attenuated or reflected by the mail piece/mail piece contents. As such, the processor 36 produces a characteristic content profile correspond ing to the transmitted light energy. While the imaging device 30 is described in the context of light energy for transillumination of the mail piece 10, it should be appreciated that other imaging devices may be employed. For example, an X-Ray tube may be used as an energy source and an X-Ray sensor or spectrometer may be used to receive the energy emissions caused by x-ray illumination. Notwithstanding the energy source for transillumination, the processor 36 collects the data, sums the pixel intensity (or average pixel intensity value) along horizontal rows of the envelope, and produces the content profile.

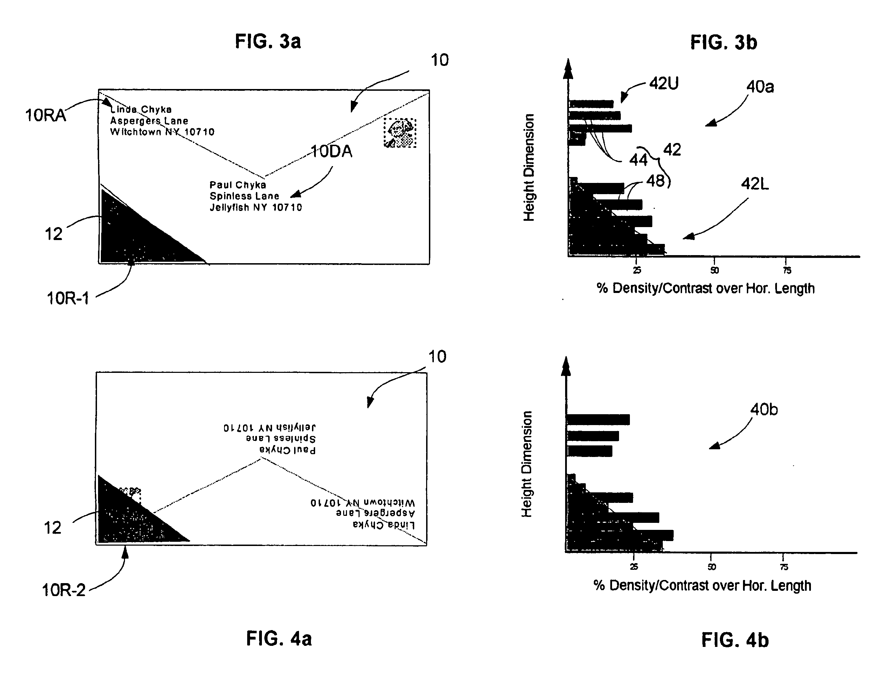

In Fig. 3a, the mail piece 10 is shown in a first spatial orientation, i.e., top side facing upwardly, and the content profile 40a corresponding thereto is depicted in the adjacent Fig. 3b. It will be apparent by examining the Figs. 3a and 3b in side-by-side relation, that the content profile 40a depicts regions of light transmission and absorption in areas of varying color/contrast/density. More specifically, the profile 40a segregates the mail piece 10 into a plurality of rows 42 (from the top to bottom edge of the mail piece) wherein each row depicts the percentage of light absorbed in the respective row. In the described embodiment, the profile is segregated into approximately twenty-two (22) discrete rows 42, though the imaging device 30 may produce more or less segments depending upon the clarity or fidelity desired. It will be apparent that each row 42 graphically depicts the transmitted light, i.e., number of dark pixels as a percentage of the total pixel count in the row. For example, the darkened upper rows 42U corresponds to a portion of the mail piece 10 where the dark print of a return address 10RA absorbs light energy on the left of the envelope and then the postage stamp absorbs energy further to the right on the same rows. Accordingly, the profile 40a shows dark rectangular blocks 44 having a height dimension corresponding to the height of the printed return address 10RA and the postage stamp. Similarly, the lower rows 42L of the profile 40a correspond to a portion of the mail piece (i.e., the lower left hand corner) where light is absorbed by the loose particulate material 12. As such, the composite image, i.e., the combined lower rows 42L, form a right triangle corresponding to the accumulation of loose particulate material in the corner region 10R-1 of the envelope. Rows 48 which extend beyond the profile of the triangle (to seemingly deviate from the hypotenuse of the right triangle) due to the additional light absorbed by the destination address at the center of the mail piece 10. The rows 42 of the content profile 40a disposed between the upper and lower rows 42U, 42R are blank due to the lack of internal powder or external print in this region of the mail piece 10.

In step C, the content profile 40a is further analyzed by the computer processor 36 for determining whether the contents of the mail piece 10 are characteristic of a powdered substance or particulate material. For example, the processor 36 may store data relating to one or more predefined baseline profiles (not shown) or a continuously maintained running average baseline value. If, by way of comparison, the actual content profile 40a is substantially similar to the baseline profile, i.e., the deviation from the baseline is within some threshold tolerance or range, then the mail piece 10 is deemed "suspect" and is out-sorted. Alternatively, or additionally, the processor 36 may employ various algorithms which calculate deviations from the predefined or average baseline. For example, when seeking to identify a powdered substance, the algorithm may examine the content profile 40a for the presence of a substantially linear line of contrast in the predefined region 10R of the mail piece. Of course, the rules for identifying such powdered substance will greatly depend upon on its physical properties. Further, the data for generating one or more baseline profiles and/or governing algorithms will, in great part, be developed by empirical testing and making various observations/rules based upon the empirical testing. Such testing and governing rules are capable of being accomplished by one possessing ordinary skill in the art based on the teachings provided herein.

Using these indicators, the mail piece 10 may be deemed to contain a powdered substance and is, consequently, "suspect". In the context used herein, "suspect" means that the mail piece may potentially contain a hazardous material or a hoax material and that certain precautionary steps or measures should be taken with respect to its subsequent handling. The term suspect is also used in view of the fact that other physical characteristics of a mail piece may effect a content profile resembling the collection of particulate material in a predefined region, e.g., a small piece of colored notepaper or an external printed logo.

In step D, suspect mail pieces 10 are culled or out-sorted. When implementing the invention in a high-speed, high volume mail sorter, various methods and apparatus may be employed for out-sorting a particular mail piece. While such out-sorting apparatus are conventionally employed for culling improperly prepared mail pieces, e.g., unreadable address, inadequate postage etc., the present invention may use the out-sorting capability to segregate any suspect mail pieces 10. That is, mail distribution facilities typically employ a system for marking/identifying mail pieces upon induction into the distribution system for use by automated mail processing equipment such as mail sorters/conveyers. Typically, such markings, e.g., a barcode identification symbol, are used by the automated processing equipment to track the mail piece at a variety of stations. The markings may be optically scanned to determine the position of the mail piece, or the mail piece carrying tray, at any instant while the mail piece is being handled by the automated processing equipment. Consequently, these existing systems can also be used to identify and out-sort the suspect mail pieces 10.

More specifically, and referring to Fig. 2b, a diverter 52 which may include a small finger, rail or tab, interrupts the normal path of the mail piece 10, i.e., while being transported by the conveyor 20, to re-direct it to an out-sorting tray or bin 54. Inasmuch as the mail sorter is capable of uniquely identifying each mail piece 10 and its spatial position/location during processing, upon identifying a suspect mail piece, in step C above, the out-sorting step D may be readily performed by linking/communicating the out-sorting apparatus 52 to the processor 36. That is, the processor 36 issues a command signal to the out-sorting apparatus 52 that, for example, a mail piece ID number XXNN is suspect and is to be out-sorted.

It may also be desirable to print a human readable symbol 56 on any out sorted mail piece 10 that it has been identified as suspect and/or a symbol 58 indicative of the orientation of the mail piece during the first examination step B. With respect to the latter, an upwardly pointing arrow 58 may be used to record the initial orientation of the mail piece such that in subsequent steps E and F (discussed in the paragraphs below) a desired orientation (other than the indicated orientation) may be selected.

In step E, the out-sorted mail pieces are placed in the jogger 14 for a second time, although now the mail pieces 10 are placed in a different orientation. That is, in step A above, if any loose particulate material is presence in a mail piece, it is collected in a predefined region due to forces acting on the mail piece, i.e., the energy field. The region where the particulate material is anticipated to collect is, naturally, based upon the orientation of the mail piece relative to such forces. In step F, and referring to Figs. 1, 2b and 4a, the loose particulate material 12 is also caused to collect in a predefined region 10R-2, however, since the orientation of the mail piece is changed, the location of the predefined region is, likewise, changed. In the described embodiment, the mail pieces 10 are rotated 180 degrees such that when the mail pieces are situated in the jogger, the suspect mail pieces are vertically arranged top-side down. Accordingly, the gravitational field in combination with the inertial field produced by the jogger 14 now causes any loose particulate material to collect in a second region or corner of the envelope. Furthermore, this orientation causes the loose particulate material to collect in a diametrically opposing corner 10R-2, i.e., from the corner 10R-1 that particulate material was first collected.

In step G and referring to Figs. 1, 2b, 4a and 4b, the suspect mail pieces are once again examined by the imaging device 30 to produce a newly-generated or second content profile 40b (Fig. 4b) for analysis. Not only can this content profile 40b be analyzed in the manner previously described in step C, i.e., compared to a predefined / average baseline or using governing algorithms, but the second profile 40b can be compared to the initially-generated or first profile 40a (Fig. 4a). If the second analysis reveals similar results, e.g., similar to the first profile or produces a contrast line consistent with the collection of a powdered substance in the anticipated region 10R-2, then, in step H, the suspicious mail piece 10 is out-sorted for yet further study and analysis. With these examination or analysis steps C and G, i.e., each indicating that a loose particulate material is contained within the mail piece 10, it may then be appropriate to take more extensive precautionary measures. Such measures may include a quarantine of the mail piece 10 along with any other mail pieces that may have been proximal to or in an area surrounding the contaminated mail piece 10 where cross-contamination may have occurred - often the entire batch of mail. Forensic analysis would be initiated to identify the nature of the suspect material and to trace the origin of the mail piece.

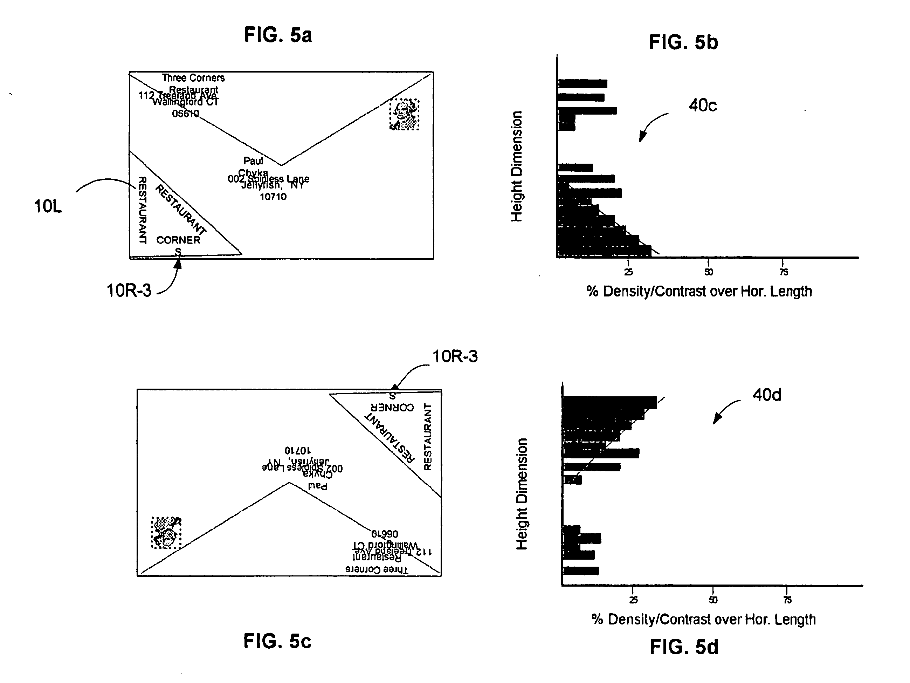

If the second analysis step G does not produce similar results then it may be presumed that the mail piece is safe for delivery. In Figs. 5a - 5d, an example of such a case is illustrated. Therein, a mail piece 10 is shown having a printed logo 10L appearing in a corner region 10R-3 thereof. An initial analysis performed in step C reveals a content profile 40c which, when compared to certain predefined baselines or algorithms, may be deemed "suspect". However, a subsequent analysis performed in step G develops a content profile 40d which is inconsistent with the shifting of powdered material to an opposing corner. As a result, a conclusion can be reached that the viewed image is that of a benign nature, e.g., printed material on the face of the mail piece 10 or some internal content material which is stationary with respect to the envelope and, therefore, not a powdered substance. Notwithstanding these results, it may be desirable to repeat steps E through G with the mail piece disposed in yet a third orientation (not shown), i.e., rotating the mail piece 180 degrees about the vertical axis, thereby collecting any particulate material, should any be present, in a third corner of the mail piece.

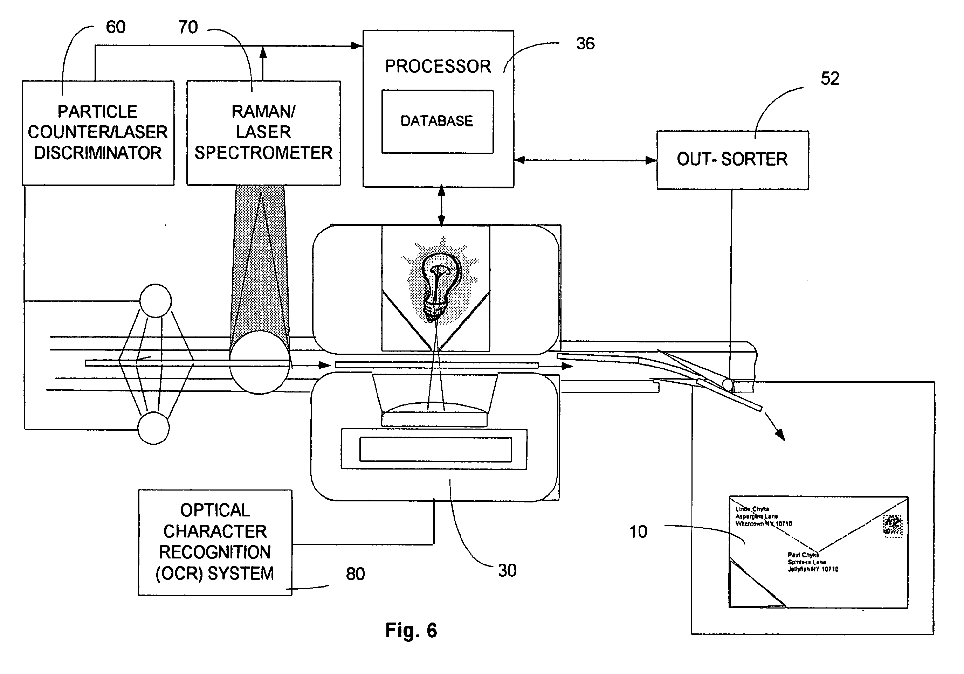

In an alternate embodiment of the invention, the system may employ additional detection or triggering technologies. In Fig. 6, other detection devices or triggers are used in combination with the imaging device 30 to improve the accuracy and veracity of various conclusions. More specifically, the use of multiple analysis tools, such as particle counters/laser discriminators 60, Raman/Laser Induced Breakdown (LIBS) spectrometers 70, Optical Character Recognition (OCR) systems 80, or thickness detection devices (not shown), which are not highly correlated improves the reliability or veracity of the conclusions reached, i.e., that a particulate material is present. That is, upon determining that: (i) the mail piece is "suspect" by the imaging device 30, (ii) the particle count exceeds a threshold level, (iii) the fluorescent signature is indicative of a biological agent or hoax material (i.e., rather than simply paper dust), and/or (iv) threatening text is observed on or within the mail piece then an alarm or advisory could be issued.

A particle counter/laser discriminator 60 can provide critical information about the number of aerosolized particles in the area of and surrounding the mail piece. Inasmuch as biohazardous/chemical materials tend to aerosolize readily, particle counter/laser discriminator 60 can detect a sudden burst of particles coincident with the passage of a particular envelope through the sortation equipment. Passage through the singulation mechanism of sortation equipment tends to disburse powders from such envelopes, which would normally result in an increase of particles in the area. For example, rod-shaped particles of anthrax are extremely small, i.e., 5 microns in length, 1 micron in diameter, and light-weight such that, once aerosolized, the particles remain airborne for an indefinite period of time.

By monitoring the running average of particles/cubic inch and comparing the instantaneous particle count to a statistical threshold value, an alarm, advisory or cue can be provided to facility operators. That is, if the instantaneous particle count exceeds some predetermined threshold value (e.g., the running average x 1.2, or 120% of the running average) and, a mail piece, within some interval of time, has been deemed "suspect", then a warning would be issued.

Additionally or alternatively, a Raman or LIB spectrometer 70 used with the imaging device 30, or employed in combination with both the imaging device 30 and the particle counter/laser discriminator 60, provides a combination of system elements which can increase confidence yet further. That is, greater confidence in the veracity of an alarm or advisory. A Raman spectrometer 70 shines a beam 72 of laser light energy in the air surrounding a passing mail piece 10 while a LIBS 70 may be used to identify materials on the envelope surface. The Raman or LIBS spectrometer 70 uses the laser beam 72 to obtain spectral signatures from individual passing particles or powders. The processor 36 retains stored data or a library of optical signature patterns associated with various known papers, hoax materials, and biohazardous/chemical materials for comparison with the returned signatures. Further, the processor 36 could be programmed to use conventional correlation analysis of the stored and detected optical signature patterns to determine the nature of the aerosolized particles being released from the passing mail pieces. Even if such spectrometers 70 cannot be used to identify specific biohazardous materials, i.e., anthrax, their use to recognize hoax materials or paper may provide significant value. That is, one can quickly negate a particle count trigger if it can readily be determined that the aerosolized particles are merely paper dust.

Additionally, an OCR system 80 can augment the previously described system elements by monitoring for inflammatory text or images. It has been observed that the imaging device 30 can capture data of sufficient fidelity or clarity to be read or interpreted by an OCR system. More specifically, back lighting of the mail piece enables text to be read within the envelope while front lighting permits the reading of text on the face of the mail piece. By passing the text through OCR algorithms it is possible to detect for the presence of inflammatory/threatening text or symbols. That is, the processor 36 can maintain a database of such text or symbols for comparison with the images read by the OCR algorithms. Similarly, the processor 36 can maintain a name/location database of known offenders such that mail pieces coming from a particular region or country may be scrutinized and/or out-sorted.

A thickness detection device may also be employed as a trigger in combination with the foregoing monitoring devices. By touching a mail piece with a thickness probe or a probe for sensing surface irregularities, additional information can be acquired useful for the detection of biohazardous or hoax materials. The method may employ a simple "touch test", i.e., a thickness detector along the bottom edge of the mail piece to feel for suspicious thickness variations, especially in the corners of the mail pieces. Alternatively, a more sophisticated mechanical probe may be used for producing a surface profile which can be compared to other known surface profiles, e.g., a surface profile known to be caused by benign content material such as paper clips, staples, etc., or known to be caused by suspicious material such as a particulate material.

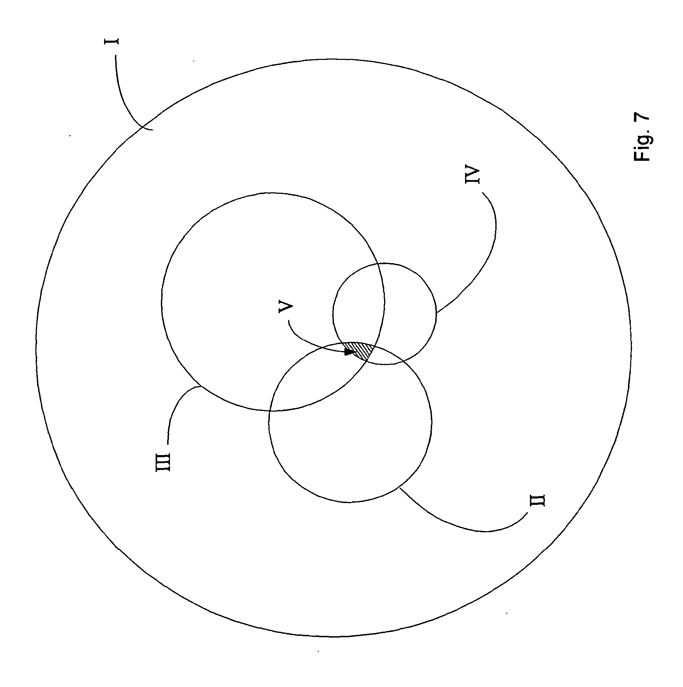

In particular, the foregoing approach may be considered in light of the Venn diagram shown in Fig. 7 which illustrates four circles or populations I - IV. The large circle I represents all mail pieces processed for delivery. A second population, represented by a second inner circle II, is illustrative of "suspect" mail pieces out-sorted by the imaging device 30. A third population represented by a third circle III, are mail pieces 10 which may release trace, but detectable, amounts of particulate matter. With respect to such population, paper envelopes are known to release significant quantities of powders as they are processed on postal automation equipment - especially as they pass through multiple mail processing stages. Similarly, traces of powdered sugar may be present in/on envelopes for various reasons of a benign nature. For example, the sender of the mail piece may have contacted or carried powdered food particles upon sealing a mail piece. A final population of mail pieces, symbolized by a fourth circle IV, are those which may seemingly contain text or symbols of an inflammatory or threatening nature. Such mail pieces are those identified by the OCR system 80.

By examination of the Venn Diagram it will be apparent that area of intersection V represents a very small, identifiable population of mail pieces. This area of intersection represents mail pieces which are "suspect" for more than one, and, in the example provided, as many as three non-correlated modes of detection, i.e., triggered by the imaging device 30, particle counter 60, and OCR system 80. It can be concluded that while mail pieces within each population, i.e., each circle of the Venn diagram, may reasonably be present, coincidence of more than one can be a matter for even greater concern.

The present invention, therefore, functions to rapidly trigger a warning or advisory when a "suspect" mail piece is detected, whether the threat is due to an actual bioterrorism event or due to a hoax perpetrated through the mail. As discussed in the Background of the Invention, the positive detection of biohazardous/chemical agents or hoax materials in real-time is a daunting task due to the complex nature of the agents/materials. In the prior art, emphasis has been placed on detection of specific biological agents such as anthrax, ricin, etc., using serially arranged detection triggers. That is, a particle counter is used to monitor an instantaneous particle count and, upon exceeding some threshold value of aerosolized particles, a DNA analyzer is used to determine whether the increased particle count is due to a specific biological agent. Hence, if the increase was produced by a material commonly used in hoax, such as talcum powder, no alarm would sound nor would the mail pieces containing such material be out sorted. As a result, the threatening mail piece is delivered in the normal course of mailing and the hoax is successfully perpetrated (along with the adverse consequences of business delay, interruption and mental anguish).

In contrast, the present invention employs simple, non-specific trigger technology and protocols to monitor for the presence of suspicious agents/materials. The mail piece is examined by detection triggers which are indicative of non-specific properties of a particulate material, such as the characteristic of a powder to flow (under gravitational or inertial forces), aerosolize in air, emit a spectral signature in response to spectral illumination, or produce surface irregularities on the face of a mail piece. As such, monitoring or examining mail pieces concurrently or in parallel two or more detection triggers, the invention provides a powerful yet low cost method for out-sorting threatening mail pieces; that is, mail pieces which heretofore would be delivered irrespective the adverse business and human consequences produced by hoaxes perpetrated through the mail distribution system.

Although the invention has been described with respect to a preferred embodiment thereof, it will be understood by those skilled in the art that the foregoing and various other changes, omissions and deviations in the form and detail thereof may be made without departing from the scope of this invention.

## Claims

1. A method for identifying mail pieces containing a threatening agent/material comprising the steps of:
causing a particulate material to collect in a first region of a mail piece;
producing a first content profile indicative of the internal contents of the mail piece;
analyzing the first content profile to determine if the first content profile indicates the presence of the particulate material in the first region of the mail piece;
out-sorting the mail piece if the first content profile is indicative of the presence of particulate material in the mail piece;
causing the particulate material contained in the out-sorted mail piece to collect in a second region of the out sorted mail piece;
producing a second content profile indicative of the internal contents of the mail piece; and
comparing the first and second content profiles for determining whether the comparison indicates that particulate material has moved from the first region to the second region.

2. The method according to Claim 1, wherein the step of producing a first content profile further includes the step of arranging the mail piece in a first orientation to cause particulate material disposed within the mail piece to settle into a first region of the mail piece, and wherein the step of producing a second content profile includes the step of arranging the mail piece in a second orientation to cause the particulate material to settle in a second region of the mail piece.

3. The method according to Claim 1 or 2, wherein each collection step is performed by subjecting the mail piece to gravitational and inertial forces.

4. The method according to Claim 1, wherein the step of producing the first content profile includes the steps of providing an energy source and a receiver/detector and passing the mail piece therebetween such that energy is transmitted through the mail piece for receipt by the receiver/detector.

5. The method according to Claim 4, wherein the energy source is light energy and the receiver/detector is a camera.

6. The method according to Claim 4, wherein the energy source is an X-ray and the receiver/detector is one of an X-ray camera and a spectrometer.

7. The method according to Claim 1 further **characterized by** the step of monitoring an area surrounding the mail piece for a number of aerosolized particles, and wherein the mail piece is out-sorted if the first content profile is indicative of the presence of the particulate material and the number of aerosolized particles exceeds a threshold value.

8. The method according to Claim 1 further **characterized by** the step of producing a spectral signature of aerosolized particles surrounding the mail piece and wherein the mail piece is out-sorted if the first content profile is indicative of the presence of the particulate material and the spectral signature indicates the presence of a threatening material.

9. The method according to Claim 1 further **characterized by** the step of scanning the mail piece to detect whether the mail piece contains at least one of a threatening message and threatening symbol and wherein the mail piece is out-sorted if the first content profile is indicative of the presence of the particulate material and the scanning step detects the at least one of the threatening message and threatening symbol.

10. A system for identifying mail pieces containing a threatening agent/material comprising:
first means for causing a particulate material to collect in a first predefined region of a mail piece;
means for accepting the mail piece from the first means and operative to produce a first content profile indicative of the internal contents of the mail piece;
a processor to determine if the first content profile indicates the presence of the particulate material in the predefined region of the mail piece;
an out-sorting mechanism for out-sorting the mail piece when the processor determines that the first content profile indicates the presence of the particulate material in the first predefined region of the mail piece;
means for causing particulate material to collect in a second predefined region of the outsorted mailpiece and to produce a second content profile indicative of the internal contents of the mail piece; and
means for comparing the first and second content profiles for determining whether the comparison indicates that particulate material has moved from the first region to the second region.

## Patentansprüche

1. Verfahren zum Identifizieren von Poststücken, die ein bedrohliches Agens/Material enthalten, umfassend die Schritte:
Veranlassen des bestimmten Materials, sich in einem ersten Bereich eines Poststückes zu sammeln;
Erzeugen eines ersten Inhaltsprofils, das für die internen Inhalte des Poststückes indikativ ist;
Analysieren des ersten Inhaltsprofils, um zu bestimmen, ob das erste Inhaltsprofil die Anwesenheit des bestimmten Materials im ersten Bereich des Poststückes indiziert;
Aussortieren des Poststückes, falls das erste Inhaltsprofil für die Anwesenheit von bestimmtem Material im Poststück indikativ ist;
Veranlassen des in dem aussortierten Poststück enthaltenen bestimmten Materials, sich in einem zweiten Bereich des aussortierten Poststücks zu sammeln;
Erzeugen eines zweiten Inhaltsprofils, das für die internen Inhalte des Poststücks indikativ ist; und
Vergleichen der ersten und zweiten Inhaltsprofile zur Bestimmung, ob der Vergleich anzeigt, dass bestimmtes Material sich vom ersten Bereich zum zweiten Bereich bewegt hat.

2. Verfahren gemäß Anspruch 1, wobei der Schritt der Erzeugung eines ersten Inhaltsprofils weiterhin den Schritt des Anordnens des Poststücks in einer ersten Orientierung beinhaltet, um das innerhalb des Poststücks angeordnete bestimmte Material dazu zu veranlassen, sich in einem ersten Bereich des Poststücks niederzulassen und wobei der Schritt der Erzeugung eines zweiten Inhaltsprofils den Schritt der Anordnung des Poststücks in einer zweiten Orientierung beinhaltet, um das bestimmte Material zu veranlassen, sich in einem zweiten Bereich des Poststücks niederzulassen.

3. Verfahren gemäß Anspruch 1 oder 2, wobei jeder Sammlungsschritt durch Unterwerfen des Poststückes unter Gravitations- und Trägheitskräfte durchgeführt wird.

4. Verfahren gemäß Anspruch 1, wobei der Schritt des Erzeugens des ersten Inhaltsprofils die Schritte des Bereitstellens einer Energiequelle und eines Empfängers/Detektors und Hindurchführen des Poststückes , so dass Energie durch das Poststück zum Empfang durch den Empfänger/Detektor übertragen wird, beinhaltet.

5. Verfahren gemäß Anspruch 4, wobei die Energiequelle Lichtenergie und der Empfänger/Detektor eine Kamera ist.

6. Verfahren gemäß Anspruch 4, wobei die Energiequelle Röntgen und der Empfänger/Detektor eine Röntgenkamera oder ein Spektrometer ist.

7. Verfahren gemäß Anspruch 1, weiterhin **gekennzeichnet durch** den Schritt der Überwachung eines das Poststück umgebenden Bereichs bezüglich einer Anzahl von Aerosolpartikeln und wobei das Poststück aussortiert wird, falls das erste Inhaltsprofil für die Anwesenheit von dem bestimmten Material indikativ ist und die Anzahl von Aerosolpartikeln einen Schwellenwert übersteigt.

8. Verfahren gemäß Anspruch 1, weiter **gekennzeichnet durch** den Schritt des Erzeugens einer Spektralsignatur von das Poststück umgebenden Aerosolpartikeln und wobei das Poststück aussortiert wird, falls das erste Inhaltsprofil für die Anwesenheit des bestimmten Materials indikativ ist und die Spektralsignatur die Anwesenheit eines bedrohlichen Materials indiziert.

9. Verfahren gemäß Anspruch 1, weiter **gekennzeichnet durch** den Schritt des Abtastens des Poststückes, um zu detektieren, ob das Poststück zumindest eine bedrohliche Nachricht und ein bedrohliches Symbol enthält und wobei das Poststück aussortiert wird, falls das erste Inhaltsprofil für die Anwesenheit des bestimmten Materials indikativ ist und der Abtastschritt die bedrohliche Nachricht und/oder das bedrohliche Symbol detektiert.

10. System zum Identifizieren von Poststücken, die ein bedrohliches Agens/Material enthalten, umfassend:
erstes Mittel zum Veranlassen eines bestimmten Materials, sich in einem ersten vordefinierten Bereich eines Poststückes zu sammeln;
Mittel zum Akzeptieren des Poststückes aus dem ersten Mittel und betreibbar, um ein erstes Inhaltsprofil zu generieren, das für die internen Inhalte des Poststückes indikativ ist;
einen Prozessor zu Determinieren, ob das erste Inhaltsprofil die Anwesenheit des bestimmten Materials im vorgegebenen Bereich des Poststückes indiziert;
ein Aussortiermechanismus zum Aussortieren des Poststückes, wenn der Prozessor bestimmt, dass das erste Inhaltsprofil die Anwesenheit des bestimmten Materials im ersten vordefinierten Bereich des Poststückes indiziert;
Mittel zum Veranlassen des bestimmten Materials, sich in einem zweiten vordefinierten Bereich des aussortierten Poststückes zu sammeln und zum erzeugen eines zweiten Inhaltsprofil, das für die internen Inhalte des Poststückes indikativ ist; und
Mittel zum Vergleichen der ersten und zweiten Inhaltsprofile, um zu bestimmen, ob der Vergleich anzeigt, dass bestimmtes Material sich vom ersten Bereich zum zweiten Bereich bewegt hat.

## Revendications

1. Procédé pour identifier des pièces de courrier contenant un agent/une matière constituant une menace, comprenant les étapes qui consistant :
à provoquer la collecte d'une matière en particules dans une première région d'une pièce de courrier ;
à produire un premier profil de contenu indicatif du contenu interne de la pièce de courrier ;
à analyser le premier profil de contenu pour déterminer si le premier profil de contenu indique la présence de la matière en particules dans la première région de la pièce de courrier ;
à isoler par tri la pièce de courrier si le premier profil de contenu est indicatif de la présente de matière en particules dans la pièce de courrier ;
à provoquer la collecte de la matière en particules contenue dans la pièce de courrier isolée par tri dans une seconde région de la pièce de courrier isolée par tri ;
à produire un second profil de contenu indicatif du contenu intérieur de la pièce de courrier ; et
à comparer les premier et second profils de contenu pour déterminer si la comparaison indique qu'une matière en particules s'est déplacée de la première région à la seconde région.

2. Procédé selon la revendication 1, dans lequel l'étape de production d'un premier profil de contenu comprend en outre l'étape consistant à agencer la pièce de courrier dans une première orientation pour amener une matière en particules disposée dans la pièce de courrier à se déposer dans une première région de la pièce de courrier, et dans lequel l'étape de production d'un second profil de contenu comprend l'étape consistant à agencer la pièce de courrier dans une seconde orientation pour amener la matière en particules à se déposer dans une seconde région de la pièce de courrier.

3. Procédé selon la revendication 1 ou 2, dans lequel chaque étape de collecte est exécutée en soumettant la pièce de courrier à des forces de gravité et d'inertie.

4. Procédé selon la revendication 1, dans lequel l'étape de production du premier profil de contenu comprend les étapes consistant à fournir une source d'énergie et un récepteur/détecteur et à faire passer la pièce de courrier entre eux de façon que de l'énergie soit transmise à travers la pièce de courrier pour être reçue par le récepteur/détecteur.

5. Procédé selon la revendication 4, dans lequel la source d'énergie est de l'énergie lumineuse et le récepteur/détecteur est un appareil de prise de vues.

6. Procédé selon la revendication 4, dans lequel la source d'énergie est un rayon X et le récepteur/détecteur est l'un d'un appareil de prise de vues à rayons X et d'un spectromètre.

7. Procédé selon la revendication 1, **caractérisé en outre par** l'étape consistant à surveiller dans une zone entourant la pièce de courrier un nombre de particules formant un aérosol, et dans lequel la pièce de courrier est isolée par tri si le premier profil de contenu est indicatif de la présence de la matière en particules et si le nombre de particules formées en aérosol dépasse une valeur de seuil.

8. Procédé selon la revendication 1, **caractérisé en outre par** l'étape qui consiste à produire une signature spectrale de particules formées en aérosol entourant la pièce de courrier et dans lequel la pièce de courrier est isolée par tri si le premier profil de contenu est indicatif de la présence de la matière en particules et si la signature spectrale indique la présence d'une matière constituant une menace.

9. Procédé selon la revendication 1, **caractérisé en outre par** l'étape consistant à soumettre la pièce de courrier à un balayage pour détecter si la pièce de courrier contient au moins l'un d'un message constituant une menace et d'un symbole constituant une menace, et dans lequel la pièce de courrier est isolée par tri si le premier profil de contenu est indicatif de la présence de la matière en particules et si l'étape de balayage détecte au moins l'un du message constituant une menace et du symbole constituant une menace.

10. Système pour identifier des pièces de courrier contenant un agent/une matière constituant une menace, comportant :
un premier moyen destiné à provoquer la collecte d'une matière en particules dans une première région prédéfinie d'une pièce de courrier ;
un moyen destiné à accepter la pièce de courrier provenant du premier moyen et agissant de façon à produire un premier profil de contenu indicatif du contenu intérieur de la pièce de courrier ;
un processeur destiné à déterminer si le premier profil de contenu indique la présence de la matière en particules dans la région prédéfinie de la pièce de courrier ;
un mécanisme d'isolement par tri destiné à isoler par tri la pièce de courrier lorsque le processeur détermine que le premier profil de contenu indique la présence de la matière en particules dans la première région prédéfinie de la pièce de courrier ;
un moyen destiné à provoquer la collecte d'une matière en particules dans une seconde région prédéfinie de la pièce de courrier isolée par tri et à produire un second profil de contenu indicatif du contenu intérieur de la pièce de courrier ; et
un moyen destiné à comparer les premier et second profils de contenu pour déterminer si la comparaison indique que la matière en particules s'est déplacée de la première région à la seconde région.
